# EUROPÄISCHE PATENTSCHRIFT

(11) **EP 1 084 889 B1**
(45) Veröffentlichungstag und Bekanntmachung des Hinweises auf die Patenterteilung: **09.06.2004**
(21) Anmeldenummer: 00117409.3
(22) Anmeldetag: 11.08.2000
(51) Int. Cl.: B60K 15/03, B60K 15/035

(54) **Tankeinsatz und Verfahren zu dessen Herstellung**
Tank insert and method for its manufacturing
Insert de reservoir et méthode pour sa fabrication

(30) Priorität: 13.09.1999 DE 19943673
(43) Veröffentlichungstag der Anmeldung: 21.03.2001
(73) Patentinhaber: Kautex Textron GmbH & Co. KG., 53229 Bonn (DE)
(72) Erfinder: Stangier, Oskar, 53229 Bonn (DE)
(74) Vertreter: Lippert, Stachow, Schmidt & Partner

(56) Entgegenhaltungen:
- EP-A- 0 930 190
- EP-A- 1 063 078
- US-A- 5 404 907

## Beschreibung

Die Erfindung betrifft einen Einsatz aus thermoplastischem Material zur Verbindung mit einem Hohlkörper aus thermoplastischem Material, insbesondere als eine Anschlußöffnung eines Kraftstofftanks auskleindendes und/oder einen Sitz für ein Anschlußelement bildendes Bauteil. Ein solcher Einsatz ist aus dem gattungsbildenden Dokument US-A-5 404 907 bekannt.

Als Anschlußelemente kommen beispielsweise Ventile, Anschlußstutzen sowie Nippel in Betracht. Weiterhin kann eine Anschlußöffnung des Tanks zur Aufnahme einer Fördereinheit oder als sogenannte Geberöffnung (Füllstandsanzeige) oder auch als Einführrohranschluß ausgebildet sein.

An Kraftstofftanks sind erhöhte Anforderungen an deren Durchlässigkeit für Kohlenwasserstoffe zu stellen. Nach neuesten Umweltvorschriften darf die Gesamtkohlenwasserstoff-Emission eines abgestellten Fahrzeugs nicht mehr als 0,5 g in 24 Stunden betragen. Entsprechend hohe Anforderungen sind an die maximale Kohlenwasserstoff-Emission eines Kraftstofftank-Systems zu stellen. Aus diesem Grunde ist es bekannt, Kraftstofftanks im Co-Extrusions-Blasverfahren herzustellen, wobei deren Wandung aus einem Laminat mit einer oder mehreren für Kohlenwasserstoffe schwer permeablen Barriereschichten besteht. Solche Tanks genügen im allgemeinen den erhöhten Anforderungen im Bezug auf maximal zulässige Kohlenwasserstoff-Emissionen.

In dieser Hinsicht problematisch sind jedoch Anschlußöffnungen im Tank, die einen Dichtsitz für Stutzen, Ventile und dergleichen bilden. Da soche Anschlußöffnungen eng toleriert sein müssen, um beispielsweise einen hinreichend dichtenden und spielfreien Sitz eines Anschlußstutzens oder eines Ventils zu gewährleisten, ist es in vielen Fällen nicht möglich, den Ventilsitz bzw. Dichtsitz für das Anschlußbauteil in einem Arbeitsgang bei der Herstellung (Extrusionsblasen) des Tanks mit vorzusehen.

In dem Tank wird daher als Anschlußöffnung eine Öffnung vorgesehen. Es gibt nun verschiedene Möglichkeiten, beispielsweise ein Ventil dichtend in diese Öffnung einzusetzen. Einerseits besteht die Möglichkeit, das Ventil mittels gegen die Tankwandung anliegender Dichtungen gegen die Tankwand zu verschrauben. Diese Maßnahme ist für Kraftstofftanks wegen erhöhter Dichtigkeitsanforderungen an den Tank ungeeignet. Ein Verschweißen des Ventils mit dem Tank kommt ohne weiteres ebenfalls nicht in Betracht, da Ventile und Anschlußstutzen in der Regel insbesondere wegen der Kraftstoffbeständigkeit des Materials aus POM (Polyoximethylen) bestehen, wohingegen der Tank zumindest teilweise aus PE (Polyethylen) besteht; die verschiedenen Materialien sind nicht miteinander verschweißbar.

Deswegen werden aus POM bestehende Ventile oder Nippel mit einem aus PE gespritzten Schaft versehen, in welchen das Ventil oder der Anschlußnippel eingeclipst werden. Der Schaft kann dann im Bereich der Anschlußöffnung des Tanks mit diesem verschweißt werden, beispielsweise im Heizelement-Schweißverfahren. Letztere Vorgehensweise ist immer noch mit dem Nachteil behaftet, daß die Anschlußöffnung des Tanks im Hinblick auf eine mögliche Emission von Kohlenwasserstoffen eine Schwachstelle darstellt, da PE (Polyethylen) für Kohlenwasserstoffe permeabel ist und bei deren Anwesenheit quillt, wohingegen POM (Polyoximethylen) für Kohlenwasserstoffe kaum durchlässig ist.

Eine Anschlußöffnung im Tank stellt daher nach wie vor eine Emissionsquelle dar.

Der Erfindung liegt daher die Aufgabe zugrunde, ein in einer Anschlußöffnung einzusetzendes Verbindungselement zu schaffen, insbesondere einen Einsatz der eingangs genannten Art als Einsatz für eine Anschlußöffnung zu schaffen, dessen Permabilität für Kohlenwasserstoffe reduziert ist, so daß die Gesamt-Kohlenwasserstoff-Emissionen eines Kraftstofftanks gegenüber den bekannten Tanks verringert ist.

Die Aufgabe wird gelöst durch die Merkmale des Anspruchs 1. Ein solcher Einsatz bietet gegenüber einem nur aus Polyethylen gespritzen Einsatz den Vorzug der verringerten Durchlässigkeit für Kohlenwasserstoffe einerseits, andererseits ist ein solcher Einsatz verhältnismäßig einfach herstellbar, beispielsweise unter Verwendung des bei Herstellung des Tanks im Co-Extrusions-Blasverfahren ohnehin vorhandenen mehrschichtigen Extrudats. Es ist selbstverständlich alternativ hierzu möglich, zur Herstellung des Einsatzes plattenförmiges und mehrschichtiges Halbzeug oder beim Blasen des Tanks anfallendes überschüssiges Extrudat zu verwenden.

Zweckmäßigerweise ist der Einsatz stoffschlüssig mit dem Kraftstofftank verbindbar, vorzugsweise mit diesem verschweißbar, was insbesondere dann gewährleistet ist, wenn der Einsatz aus dem gleichen Laminat besteht wie der Tank. Für die Verbindung des Einsatzes mit dem Kraftstofftank kommen als Schweißtechniken das Heizelementschweißverfahren, Spiegelschweißen oder Reibschweißen in Betracht, wobei das Heizelementschweißverfahren bevorzugt wird.

Vorzugsweise sind zwei Barriereschichten vorgesehen. Die Barriereschichten können in einen im wesentlichen aus Polyethylen bestehenden Grundkörper eingebettet sein. Dabei ist gewährleistet, daß der Grundkörper mit dem Material des Tanks verschweißbar ist. Die Barriereschichten sollten dabei so in dem Material verlaufend angeordnet sein, daß diese bei Verschweißung des Einsatzes mit dem Tank möglichst dicht an die in der Tankwandung verlaufenden Barriereschichten anschließen. Im übrigen ist es wünschenswert, wenn die Barriereschichten möglichst in der Nähe der Innenwandung des Einsatzes verlaufen, in einem Winkel zur Längsachse des Einsatzes, so daß eine Migration von Kraftstoff um die Barriereschicht herum weitestgehend vermieden wird.

Die Barriereschichten bestehen erfindungsgemäß aus EVOH (Ethylen-Vinyl-Alkohol). Ein im Co-Extrusions-Blasverfahren hergestellter Behälter ist beispielsweise aus der DE 43 37 491 A1 bekannt.

Die der Erfindung zugrundeliegende Aufgabe wird weiterhin gelöst durch ein Verfahren nach Anspruch 6. Je nachdem wie der Schichtaufbau des verwendeten Laminats beschaffen ist, erhält der fertige Einsatz eine oder mehrere Barriereschichten. Darüber hinaus ist der Verlauf der Barriereschichten in dem Einsatz auch abhängig von der Ausbildung des Preßwerkzeugs, beispielsweise von der Lage der Werkzeugteilung bzw. der Schließ- oder Abquetschstellen des Werkzeugs.

Vorzugsweise wird ein mehrschichtiger Vorformling co-extrudiert und durch Pressen in der ersten Hitze in seine endgültige Form gebracht.

Besonders günstig ist es, wenn der Vorformling in Form eines Schlauchs extrudiert wird, dessen gegenüberliegende Wandungen in der Preßform aufeinander gedrückt werden. Ein solcher Schlauch wird beispielsweise auch zur Herstellung des Tanks extrudiert, so daß der Einsatz letztendlich mit derselben Extrusionstechnik herstellbar ist, wobei lediglich ein anderes Werkzeug erforderlich ist.

Unter Preßformen im Sinne der Erfindung wird das Formen eines erweichten thermoplastischen Materials, entweder als Extrudat oder als erweichtes Halbzeug, in einer mehrteiligen, vorzugsweise zweiteiligen Form, bestehend aus Stempel und Matritze, zu verstehen sein.

Es ist selbstverständlich auch möglich, den Einsatz aus dem bei der Herstellung des Tanks im Co-Extrusions-Blasverfahren aus dem Schlauchüberstand anfallenden Abfall (scrap), der nach dem Blasformen von dem Tank abgetrennt wird, herzustellen. Dies kann in einem Arbeitsgang beim Schließen der Blasform geschehen, so daß beim Öffnen der Blasform neben dem Tank auch der bereits preßgeformte Einsatz erhalten wird. Die Blasform ist dazu außerhalb des Formnestes mit den für die Formgebung des Einsatzes erforderlichen Preßformteilen, also Stempel und Matrize, versehen.

Die Erfindung wird nachstehend anhand mehrerer in den Zeichnungen dargestellter Ausführungsbeispiele erläutert.

Es zeigen:
- Fig. 1: einen mit einem Tank verschweißten Einsatz gemäß einem ersten Ausführungsbeispiel der Erfindung mit einem in den Einsatz eingesetzten Ventil, teilweise im Schnitt,
- Fig. 2: einen mit einem Tank verschweißten Einsatz gemäß einem zweiten Ausführungsbeispiel der Erfindung, im Schnitt,
- Fig. 3: einen Einsatz gemäß einem dritten Ausführungsbeispiel der Erfindung, im Schnitt,
- Fig. 4: einen Einsatz gemäß einem vierten Ausführungsbeispiel der Erfindung mit einem darin eingesetzten Winkelstutzen, teilweise im Schnitt,
- Fig. 5: eine Schnittansicht der geöffneten Preßform,
- Fig. 6: eine Schnittansicht der geschlossenen Preßform und
- Fig. 7: eine vergrößerte Ansicht des in Fig. 3 dargestellten Ausschnitts V.

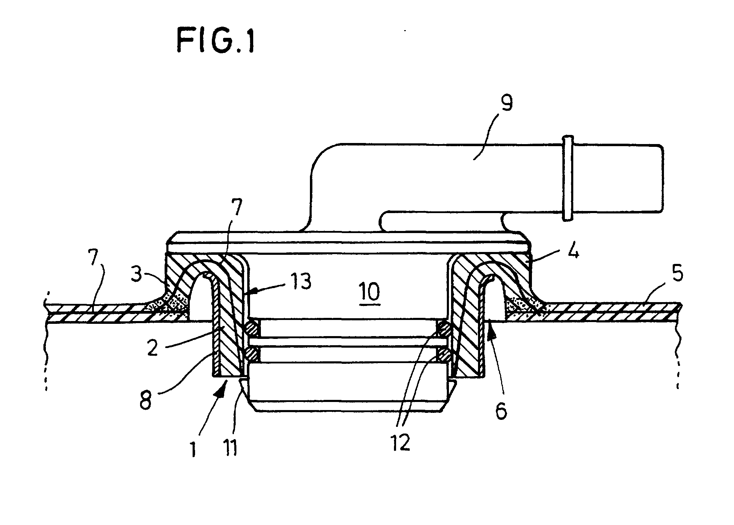

Wie dies aus Fig. 1 ersichtlich ist, ist der Einsatz 1 gemäß der Erfindung als hohlzylindrisches, ringförmiges Element mit einem zylindrischen Abschnitt 2 und einem einen Auflageflansch 3 bildenden Kragen 4 ausgebildet.

Mit 5 ist die Wandung eines im Co-Extrusions-Blasverfahren hergestellten Kraftstofftanks bezeichnet, mit welcher der Kragen 4 des Einsatzes 1 im peripheren Bereich einer Anschlußöffnung 6 verschweißt ist. Die Wandung 5 des Kraftstofftanks besteht aus einem für Kohlenwasserstoffe schwer permeablen Laminat mit einer Barriereschicht 7 aus EVOH (Ethylen-Vinyl-Alkohol). Die Barriereschicht 7 bewirkt eine Absperrung gegen das Hindurchtreten von Kohlenwasserstoffen durch die Wandung 5 des Tanks.

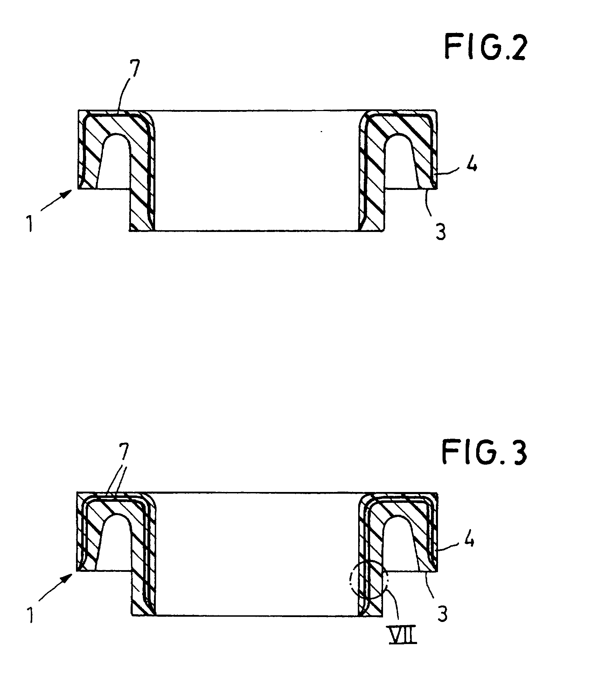

Der in den Fig. 1 und 2 dargestellte Einsatz 1 besteht gemäß der Erfindung ebenfalls aus einem für Kohlenwasserstoffe schwer permeablen Laminat mit einer Barriereschicht 7. Die in den Fig. 1 und 2 dargestellten Ausführungsbeispiele unterscheiden sich insoweit, als daß der Verlauf der Barriereschicht 7 dort jeweils unterschiedlich gewählt ist. Bei dem in Fig. 1 gezeigten Ausführungsbeispiel verläuft die Barriereschicht 7 im Bereich des zylindrischen Abschnitts 2 des Einsatzes 1 in einem Winkel zur Längsachse des Einsatzes 1 und befindet sich am unteren Ende des zylindrischen Abschnitts 2 in der Nähe dessen Innenwandung 13. Im Bereich des Kragens 4 tritt die Barriereschicht geringfügig oberhalb des Auflageflanschs 3 aus.

Bei der in Fig. 2 dargestellten zweiten Ausführungsform der Erfindung verläuft die Barriereschicht 7 idealerweise zunächst möglichst nahe an und parallel zu der Innenwandung 13 des Einsatzes 1. Im Bereich des Kragens 4 verläuft die Barriereschicht 7 möglichst nahe an der Außenseite des Einsatzes 1 und endet ziemlich genau in dem äußeren Eckbereich des Auflageflansches 3.

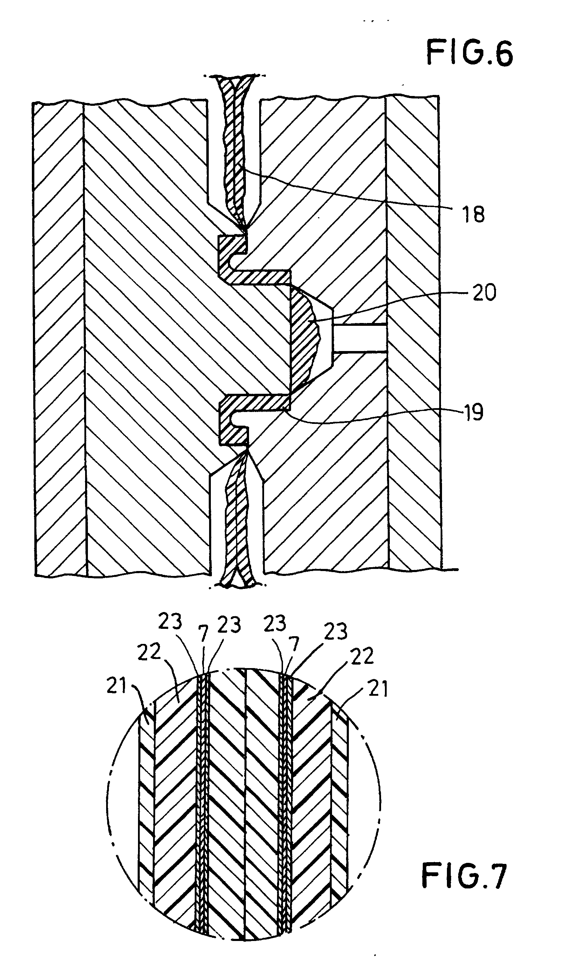

Bei dem in Fig. 3 dargestellten dritten Ausführungsbeispiel des Einsatzes 1 gemäß der Erfindung sind insgesamt zwei Barriereschichten 7 vorgesehen. Der genaue Schichtaufbau des Einsatzes 1 gemäß dem in Fig. 3 dargestellten Ausführungsbeispiel ergibt sich aus Fig. 7.

Da der Grundwerkstoff des Einsatzes 1 als auch des Tanks Polyethylen ist, welches in Anwesenheit von Kohlenwasserstoffen quillt, ist der Einsatz 1 mit einem metallenen Stützring 8 versehen, der eine Formänderung im Sinne einer Durchmesservergrößerung des Einsatzes 1 aufgrund der Aufnahme von Kohlenwasserstoffen verhindert und der den Einsatz 1 wie eine Manschette umgibt. Sollte der Einsatz 1 aufgrund der Anwesenheit von Kohlenwasserstoffen quellen, so kann dieser wegen des Vorhandenseins des metallenen Stützrings 8 nur nach innen ausweichen, so daß die Verbindung mit der Wandung 5 des Tanks nicht beeinträchtigt wird. Darüber hinaus erfährt das im Einsatz befindliche Teil, z. B. ein Ventil oder auch ein anderes Teil, bezüglich seines Sitzes im Einsatz und der damit verbundenen Abdichtung keine nachteiligen Einwirkungen.

In dem in Fig. 1 dargestellten Ausführungsbeispiel dient der Einsatz 1 als Dichtsitz für ein Ventil 9 aus POM (Polyoximethylen). Das Ventil 9 besitzt einen zylindrischen Grundkörper 10, dessen Außenkontur und dessen Außendurchmesser etwa der Innenkontur und dem Innendurchmesser des Einsatzes entspricht, und zwar mit verhältnismäßig hoher Maßhaltigkeit. Über Rastnasen 11 ist der Grundkörper 10 des Ventils 9 unlösbar mit dem Einsatz 1 verrastet. Das Ventil 9 ist gegen den Einsatz 1 mittels zweier O-Ring-Dichtungen 12 abgedichtet, wobei eine der O-Ring-Dichtungen für den Tieftemperaturbereich und die andere für den Hochtemperaturbereich vorgesehen ist.

Wie dies insbesondere aus Fig. 2 ersichtlich ist, liegt die Barriereschicht 7 im Bereich des Auflageflansches 3 möglichst weit außen, um bei Verschweißen des Auflageflansches 3 mit der Wandung 5 des Tanks einen Anschluß der Barriereschicht 7 des Einsatzes 1 an die Barriereschicht 7 der Wandung 5 zu gewährleisten. In jedem Fall sollte die Barriereschicht 7 in das Grundmaterial des Einsatzes 1 eingebettet sein, um vor physikalischen Verletzungen geschützt zu sein.

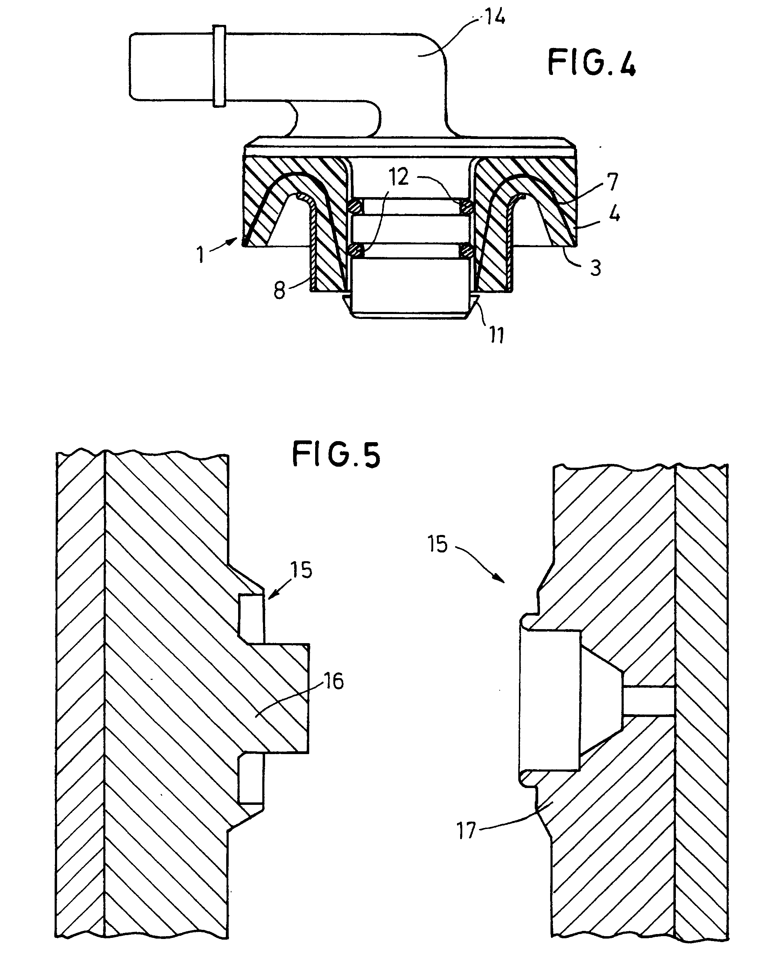

Der in Fig. 4 dargestellte Einsatz 1 nimmt anstelle eines Ventils einen Winkelstutzen aus POM (Polyoximethylen) auf. Bei allen dargestellten Ausführungsbeispielen ist eine verhältnismäßig einfache Variante des Einsatzes 1 wiedergegeben, der eine glatte Innenwandung 13 aufweist, wobei entweder der Winkelstutzen 14 oder das Ventil 9 unlösbar mit dem Einsatz 1 verrastet sind. Es ist ebenso denkbar, den Einsatz 1 mit einer profilierten Innenwandung auszustatten, beispielsweise in Form eines Gewindes, so daß das betreffende Anschlußelement mit dem Einsatz 1 verschraubbar ist.

In den Fig. 5 und 6 ist der Vorgang der Herstellung des Einsatzes 1 schematisch dargestellt. Mit 15 ist ein zweiteiliges Werkzeug, bestehend aus Stempel 16 und Matritze 17 bezeichnet, welches die Preßform zur Herstellung des Einsatzes bildet. Gemäß dem bevorzugten Verfahren ist vorgesehen, daß der Einsatz 1 durch Extrudieren eines mehrschichtigen Schlauches 18 im Co-Extrusions-Verfahren erzeugt wird, wobei der Schlauch 18 in das geöffnete Werkzeug 15 (siehe Fig. 5) eingeführt wird.

Die Teile des Werkzeugs 15, d. h. der Stempel 16 und die Matritze 17 werden aufeinanderzubewegt, wobei der Schlauch 18 die Kavität 19 des Werkzeugs 15 ausfüllt. Durch die auf die Matritze 17 und den Stempel 16 aufgebrachten Schließkräfte wird das überschüssige Material teilweise abgequetscht und teilweise in den Ausgleichsraum 20 getrieben. Der vorzugsweise aus sechs Schichten co-extrudierte Schlauch wird zu einem insgesamt zwölfschichtigen Gebilde zusammengepreßt.

Nach dem Entformen des Einsatzes 1 müssen das an diesem noch befestigte Ausgleichsvolumen sowie die seitlichen Überstände entfernt werden.

Der fertige Einsatz hat den in Fig. 7 schematisch dargestellten Aufbau aus insgesamt zwölf parallelen Schichten, von denen die beiden äußeren Schichten 21 beispielsweise aus Polyethylen bestehen, an diese schließen sich jeweils Schichten aus Regenerat 22 an. Unter Regenerat 22 ist rückgeführtes Material zu verstehen, was beispielsweise bei der Herstellung des Tanks bzw. Behälters oder bei der Herstellung des Einsatzes 1 als Abfallmaterial (scrap) angefallen ist.

Die aus EVOH (Ethylen-Vinyl-Alkohol) bestehenden Barriereschichten 7 sind jeweils in eine Haftvermittlerschicht 23 eingebettet, mit der eine Verbindung der Barriereschichten mit dem Regenerat 22 oder den äußeren Schichten 21 aus Polyethylen gewährleistet ist.

Aufgrund der Herstellung des Einsatzes über einen co-extrudierten Schlauch ergibt sich der insgesamt zwölfschichtige Aufbau, bei dem alle Schichten wenigstens doppelt vorhanden sind. Der zwölfschichtige Aufbau des Einsatzes 1 ist nur bei dem in Fig. 3 dargestellten Ausführungsbeispiel verwirklicht, bei welchem insgesamt zwei Barriereschichten 7 vorgesehen sind.

## Patentansprüche

1. Einsatz aus thermoplastischem Material zur Verbindung mit einem Hohlkörper aus thermoplastischem Material, insbesondere als eine Anschlußöffnung eines Kraftstofftanks auskleidendes und/oder einen Sitz für ein Anschlußelement bildendes Bauteil, **dadurch gekennzeichnet, daß** der Einsatz ( 1 ) durch Preßformen eines für Kohlenwasserstoffe schwer permeablen Laminats erhalten wurde, daß der Einsatz aus einem Laminat mit wenigstens einer Barriereschicht (7) für Kohlenwasserstoffe besteht und daß die Barriereschicht (7) aus Ethylen-Vinyl-Alkohol besteht.

2. Einsatz nach Anspruch 1, **dadurch gekennzeichnet, daß** der Einsatz (1) stoffschlüssig mit dem Kraftstofftank verbindbar ist, vorzugsweise mit diesem verschweißbar ist.

3. Einsatz nach einem der Ansprüche 1 oder 2, **dadurch gekennzeichnet, daß** die Barriereschicht (7) oder Barriereschichten (7) nahezu vollständig in das Material des Einsatzes (1), vorzugsweise wenigstens im Bereich eines zylindrischen Abschnitts (2) des Einsatzes (1) nahe dessen Innenwandung (13) verlaufend eingebettet ist oder sind.

4. Einsatz nach einem der Ansprüche 1 bis 3, **dadurch gekennzeichnet, daß** zwei Barriereschichten (7) vorgesehen sind.

5. Einsatz nach einem der Ansprüche 1 bis 4, **dadurch gekennzeichnet, daß** die Barriereschichten (7) in einen im wesentlichen aus Polyethylen bestehenden Grundkörper eingebettet sind.

6. Verfahren zur Herstellung eines Einsatzes zur dichtenden und unlösbaren Verbindung mit einem Kraftstofftank aus thermoplastischem Material, **dadurch gekennzeichnet, dass** der Einsatz durch Pressformen erweichen thermoplastischen Materials als Extrudat oder Halbzeug in Form eines für Kohlenwasserstoffe schwer permeablen Laminats in einer mehrteiligen Form erhalten wird.

7. Verfahren nach Anspruch 6, **gekennzeichnet durch** Co-Extrudieren eines mehrschichtigen Vorformlings und **durch** Pressen des Vorformlings in der ersten Hitze in die endgültige Form.

8. Verfahren nach einem der Ansprüche 6 oder 7, **dadurch gekennzeichnet, dass** der Vorformling in Form eines Schlauchs extrudiert wird, dessen gegenüberliegende Wandungen in der Pressform aufeinandergedrückt werden.

9. Hohlkörper aus thermoplastischem Material, insbesondere Kraftstofftank, mit einem Einsatz mit den Merkmalen eines der Ansprüche 1 bis 5.

## Claims

1. An insert of thermoplastic material for connection to a hollow body of thermoplastic material, in particular in the form of a component for lining a connection opening of a fuel tank and/or a seat for a connection element, **characterized in that** the insert (1) was obtained by press shaping of a laminate involving a low level of permeability for hydrocarbons, that the insert comprises a laminate with at least one barrier layer (7) for hydrocarbons and that the barrier layers (7) comprise ethylene vinyl alcohol.

2. An insert according to claim 1 **characterised in that** the insert (1) can be connected to the fuel tank by a connection involving joining of the materials concerned, preferably by welding.

3. An insert according to one of claims 1 or 2 **characterised in that** the barrier layer or layers (7) is or are almost completely embedded into the material of the insert (1), preferably at least in the region of a cylindrical portion (3) of the insert (1) near the inside wall (13) thereof.

4. An insert according to one of claims 1 to 3 **characterised in that** there are at least two barrier layers.

5. An insert according to one of claims 1 to 4 **characterised in that** the barrier layers (7) are embedded in a main body substantially comprising polyethylene.

6. A process for producing an insert for sealing and non-releasable connection to a fuel tank of thermoplastic material, **characterised in that** the insert is obtained by press shaping of softened thermoplastic material in the form of an extrudate or semifinished product in the form of a laminate with a low level of permeability for hydrocarbons in a multi-part mould.

7. A process according to claim 6 **characterised by** co-extrusion of a multi-layer preform and pressing of the preform in the first heat to the definitive shape.

8. A process according to one of claims 6 and 7 **characterised in that** the preform is extruded in the form of a tube whose oppositely disposed walls are pressed against each other in the pressing mould.

9. A hollow body of thermoplastic material, in particular a fuel tank, including an insert according to one of claims 1 to 5.

## Revendications

1. Insert en matériau thermoplastique pour réaliser une liaison avec un corps creux en matériau thermoplastique, en particulier comme composant servant à revêtir une ouverture de raccordement d'un réservoir de carburant et/ou formant un siège pour un élément de raccordement, **caractérisé en ce que** l'insert (1) a été obtenu par un moulage sous pression d'un aggloméré laminé difficilement perméable aux hydrocarbures, **en ce que** l'insert se compose d'un aggloméré laminé avec au moins une couche de barrage (7) pour les hydrocarbures et **en ce que** la couche de barrage (7) se compose d'alcool de vinyle d'éthylène.

2. Insert selon la revendication 1, **caractérisé en ce que** l'insert (1) peut être relié en complémentarité de matière avec le réservoir de carburant, de préférence être soudé avec celui-ci.

3. Insert selon l'une quelconque des revendications 1 ou 2, **caractérisé en ce que** la couche de barrage (7) ou les couches de barrage (7) est(sont) enrobée(s) presque entièrement dans le matériau de l'insert (1), de préférence en s'étendant au moins dans la zone d'un tronçon cylindrique (2) de l'insert (1) à proximité de sa paroi intérieure (13).

4. Insert selon l'une quelconque des revendications 1 à 3, **caractérisé en ce que** deux couches de barrage (7) sont prévues.

5. Insert selon l'une quelconque des revendications 1 à 4, **caractérisé en ce que** les couches de barrage (7) sont enrobées dans un corps de base se composant pour l'essentiel de polyéthylène.

6. Procédé pour la réalisation d'un insert pour assurer une liaison étanche et non détachable avec un réservoir de carburant en matériau thermoplastique, **caractérisé en ce que** l'insert est obtenu dans un moule en plusieurs parties par un moulage sous pression d'un matériau thermoplastique ramolli comme produit d'extrusion ou comme produit semi-fini sous la forme d'un aggloméré laminé difficilement perméable aux hydrocarbures.

7. Procédé selon la revendication 6, **caractérisé par** une co-extrusion d'une préforme multicouche et par un pressage de la préforme sous la première chaleur jusqu'à la forme définitive.

8. Procédé selon l'une quelconque des revendications 6 ou 7, **caractérisé en ce que** la préforme est extrudée sous la forme d'un tuyau dont les parois opposées sont pressées l'une contre l'autre dans le moule sous pression.

9. Corps creux en matériau thermoplastique, en particulier réservoir de carburant, avec un insert ayant les caractéristiques de l'une quelconque des revendications 1 à 5.
